# EUROPEAN PATENT SPECIFICATION

(11) **EP 2 586 687 B1**
(45) Date of publication and mention of the grant of the patent: **01.05.2019**
(21) Application number: 12186622.2
(22) Date of filing: 28.09.2012
(51) Int. Cl.: B62J 9/00, B62J 7/08

(54) **Saddle type vehicle with mounting structure for trunk device**
Fahrzeug mit Sattel mit Montagestruktur für einen Koffer
Véhicule à selle avec structure de montage pour coffre

(30) Priority: 31.10.2011 JP 2011238442
(43) Date of publication of application: 01.05.2013
(73) Proprietor: Honda Motor Co., Ltd., Tokyo 107-8556 (JP)
(72) Inventor: Taniguchi, Masayuki, Wako-shi Saitama 351-0193 (JP); Ikezaki, Masahiko, Wako-shi Saitama 351-0193 (JP); Kawano, Shizuo, Wako-shi Saitama 351-0193 (JP)
(74) Representative: Dehns

(56) References cited:
- EP-A1- 1 661 799
- EP-A1- 2 287 066
- EP-A1- 2 597 019
- WO-A1-2011/098897
- DE-A1- 4 230 972

## Description

The present invention relates to a saddle type vehicle with a mounting structure for a trunk device.

A known form of trunk device for a saddle type vehicle is disclosed In Japanese Patent No. 4344680. The trunk device for a saddle type vehicle includes: a carrier (C) provided on a saddle type vehicle; a trunk (T) detachably mounted to the carrier (C); a front locking section (28) and a rear locking section (29) which project to the carrier (C) side at the front and rear of a mounting surface of the trunk (T) for mounting to the carrier (C); and an engaging hook (46) which operates according to an operator's operation and which engages with the carrier (C) to thereby fix the trunk (T) to the carrier (C) (reference numerals are those used in Japanese Patent No. 4344680).

Other forms of trunk device for saddle type vehicles are disclosed in EP 2287066, WO 2011/098897 (on which the preamble of claim 1 is based), and DE 4230972.

A problem to be solved by at least the preferred embodiments of the present invention is to provide a mounting structure for a trunk device for a saddle type vehicle such that the rigidity required of a trunk can be reduced and the trunk can be made smaller in material thickness and weight. Another problem to be solved by the preferred embodiments of the present invention is to provide a saddle type vehicle equipped with the structure and a trunk device for the saddle type vehicle.

According to a first aspect of the invention, there is provided a saddle type vehicle with a mounting structure for a trunk device, said mounting structure comprising: a carrier provided on the rear of a saddle type vehicle to hold baggage on a top face of the carrier; a trunk device which has a trunk for storing articles and which is detachably mounted to the top face of the carrier; a front locking section and a rear locking section projecting to the carrier side at the front and rear of a mounting surface of the trunk device for mounting to the carrier; and an engaging hook which operates according to an operator's operation and engages with the carrier to thereby fix the trunk device to the carrier, characterized in that the front locking section and the rear locking section are composed of a front locking hook and a rear locking hook which are bent in the same direction selected from forward and rearward directions, and the engaging hook is bent in a direction opposite to the bending direction of both the locking hooks and, at the time of a fixing operation by the operator, is moved in the direction opposite to the bending direction of both the locking hooks, to be engaged with the carrier.

According to this structure, the front locking section and the rear locking section are composed of the front locking hook and the rear locking hook which are bent in the same direction (forward or rearward). The engaging hook is bent in the direction opposite to the bending direction of both the locking hooks. Further, at the time of the fixing operation by the operator, the engaging hook is moved in the direction opposite to the bending direction of both the locking hooks, to be engaged with the carrier. Therefore, the trunk device can be efficiently fixed to the carrier of the saddle type vehicle.

Specifically, since both the front locking section and the rear locking section are composed of hooks, the fixing parts for fixing the trunk device to the carrier are all composed of hooks. Therefore, the force exerted on the trunk can be dispersed to the hook parts, whereby the rigidity required of the trunk can be reduced, and the trunk can be made smaller in material thickness and weight. Further, since the front locking hook and the rear locking hook are bent in the same direction, operations of mounting and detaching the trunk device to and from the carrier are not obstructed by the structure in any way.

Preferably, the front locking hook and the rear locking hook are composed respectively of members which are formed separately from the trunk and are connected to the trunk, the engaging hook is attached to the member constituting the front locking hook or the rear locking hook, and the trunk has at least one rib which extends in the longitudinal direction of the vehicle between the members constituting the front locking hook and the rear locking hook and which is moulded integrally with the trunk.

This configuration secures the rigidity of the member to which the engaging hook is attached, and makes it possible to lower the rigidity required of the trunk and to render the trunk smaller in material thickness and weight.

In a further preferred form, the locking hook on the opposite side from the side where the engaging hook is attached has a bent section extending in the bending direction thereof in two stages.

With this configuration, even if the first-stage bent section is disengaged from the carrier, the locking to the carrier can be maintained by the second-stage bent section. If the bent section is configured in a one-stage fashion and its length is simply enlarged, the operations of mounting and detaching the trunk device to and from the carrier may be difficult to carry out. When the bent section is bent in two stages, on the other hand, such a difficulty can be avoided.

Preferably, the front locking hook and the rear locking hook are both bent in the rearward direction, the engaging hook is disposed between the front locking hook and the rear locking hook, the rear locking hook is composed of a member formed separately from the trunk and is connected to the trunk, and the engaging hook, an operating lever for operating the engaging hook, and an interlocking member for interlocking the operating lever and the engaging hook with each other, are all incorporated in the said member.

This configuration ensures the rigidity of the member to which the engaging hook is attached, and makes it possible to lower the rigidity required of the trunk and to make the trunk smaller in material thickness and weight. In addition, it is possible to arrange an engaging hook operating mechanism in a concentrated state on the rear side in the trunk, whereby the capacity of the trunk can be easily secured.

Preferably, the carrier is provided at a rear portion of the vehicle, and a carrying handle allowing the trunk to be carried is provided at a rear portion of the trunk, and the front locking hook and the rear locking hook are both bent in the rearward direction, the operating lever for operating the engaging hook is provided to the rear of the rear locking hook, and a rearward movement of an operating section of the operating lever releases the engagement between the carrier and the engaging hook.

This ensures that operations of mounting and detaching the trunk device to and from the carrier can be easily carried out on the rear side of the vehicle. It is also ensured that at the time of a releasing operation by use of the operating lever (that is, when the engaging hook is disengaged from the carrier), a force in the direction for engaging with the carrier acts on the front locking hook and the rear locking hook. Consequently, the releasing operation can be carried out smoothly.

A preferred embodiment of the invention will now be described by way of example only and with reference to the accompanying drawings, in which:
Fig. 1 is a side view, partially in section, showing an embodiment of a mounting structure for a trunk device for a saddle type vehicle, a saddle type vehicle equipped with the structure and a trunk device for the saddle type vehicle;
Fig. 2 is a sectional view taken along line 2-2 in Fig. 3 showing an embodiment of the trunk device for a saddle type vehicle;
Fig. 3 is a partial bottom view of the same;
Fig. 4 is a partial rear view of the same;
Fig. 5 is a view of a part of the trunk taken along arrow 5 in Fig. 2;
Fig. 6 is a sectional view taken along line 6-6 in Fig. 5;
Fig. 7 is a plan view of a rear locking member 40 and an engaging operation mechanism 50;
Fig. 8 is a sectional view taken along line 8-8 in Fig. 7;
Fig. 9 is a sectional view taken along line 9-9 in Fig. 8;
Fig. 10 is a sectional view taken along line 10-10 in Fig. 8;
Fig. 11 is a perspective view showing the bottom surface of the above embodiment;
Fig. 12 is a perspective view showing a mounting operation;
Fig. 13 is a perspective view of the trunk in a state in which a lid is opened; and
Fig. 14 is a perspective view of the trunk in another state in which the lid is opened.

An embodiment of a mounting structure for a trunk device for a saddle type vehicle, a saddle type vehicle equipped with the structure, and a trunk device for the saddle type vehicle according to the present invention will now be described with reference to the drawings. In the drawings, the same or corresponding parts will be denoted by the same reference symbols.

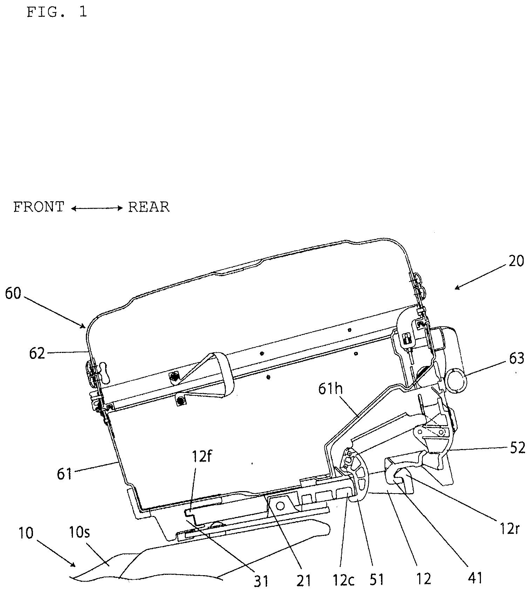

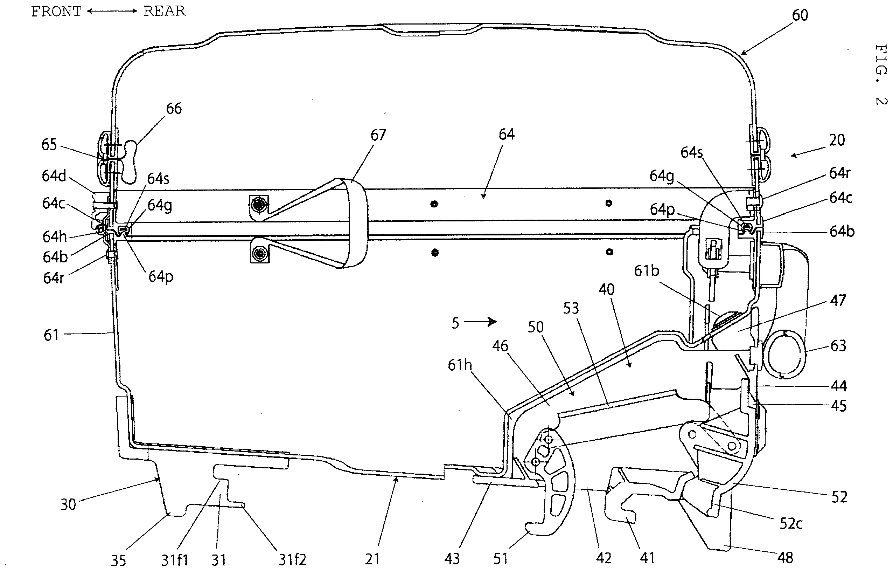

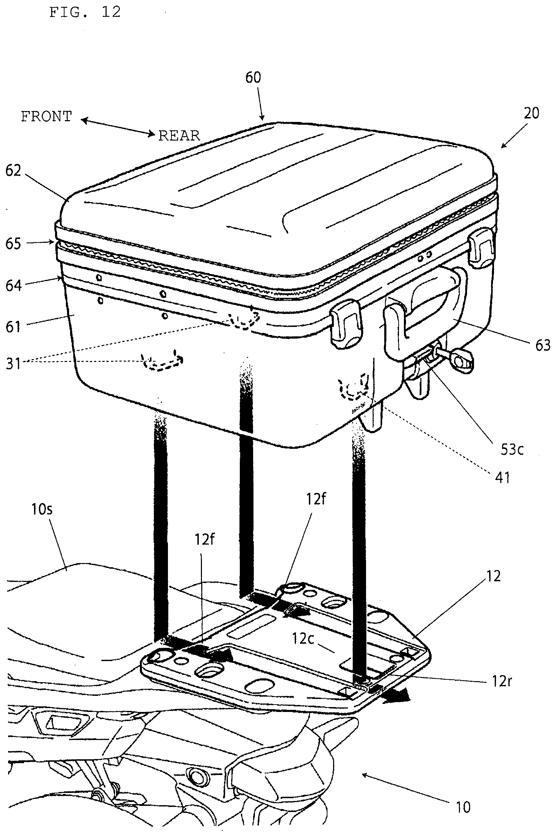

As shown in Figs. 1 and 2, the mounting structure for a trunk device for a saddle type vehicle includes: a carrier 12 provided on a saddle type vehicle 10 (see Fig. 12); a trunk device 20 detachably mounted to the carrier 12; a front locking section 31 and a rear locking section 41 which project toward the carrier 12 at the front and rear, with respect to a longitudinal direction of the vehicle (the left-right direction in Fig. 1), of a mounting surface 21 of the trunk device 20, for mounting to the carrier 12; and an engaging hook 51 for fixing the trunk device 20 to the carrier 12.

Examples of the saddle type vehicle 10 include motorcycles, motor tricycles, and saddle type four-wheeled vehicles. The carrier 12 can be provided behind a seat 10s of the saddle type vehicle 10.

The trunk device 20 has a trunk 60 in which to store articles.

The engaging hook 51 is operated according to the operator's operation, and, when it is engaged with the carrier 12, the trunk 20 is fixed to the carrier 12.

The front locking section 31 and the rear locking section 41 are composed of a front locking hook and a rear locking hook, which are bent in the same direction selected from forward and rearward directions. In the example shown in the drawings, the front locking section 31 and the rear locking section 41 are composed respectively of a front locking hook 31 and a rear locking hook 41, which are both bent in the rearward direction. However, the front locking section 31 and the rear locking section 41 may be composed respectively of a front locking hook and a rear locking hook which are both bent in the forward direction.

The engaging hook 51 is composed of an engaging hook which is bent in the direction opposite to the bending direction of the locking hooks 31 and 41 (in the example shown, the forward direction). At the time of a fixing operation by the operator, the engaging hook 51 is moved in the direction opposite to the bending direction of the locking hooks 31 and 41 (in the example shown, the forward direction), to be engaged with the carrier 12.

With this arrangement, in which the front locking hook 31 and the rear locking hook 41 are both bent in the rearward direction, the engaging hook 51 is bent in the direction opposite to the bending direction of the locking hooks 31 and 41, and, at the time of a fixing operation by the operator, the engaging hook 51 is moved forward to be engaged with the carrier 12, the trunk device 20 can be efficiently fixed to the carrier 12 of the saddle type vehicle 10.

Specifically, both the front locking section 31 and the rear locking section 41 are composed of hooks; thus, all the fixing parts for fixing the trunk device 20 to the carrier 12 are hooks (31, 41, 51). Accordingly, force exerted on the trunk 60 can be dispersed to the hook parts, so that the rigidity required of the trunk 60 can be reduced and the trunk 60 can be reduced in material thickness and weight. Moreover, the engaging hook 51 is bent in the direction opposite to the bending direction of the locking hooks 31 and 41, and, at the time of a fixing operation by the operator, the engaging hook 51 is moved in the direction opposite to the bending direction of the locking hooks 31 and 41, to be engaged with the carrier 12. The engagement with the carrier 12 is effected by a movement in the direction for engaging the locking hooks 31 and 41 with the carrier 12 (in the example shown, moving the trunk device 20 rearward relative to the carrier 12), so that the trunk device 20 can be smoothly fixed to the carrier 12. Moreover, since the front locking hook 31 and the rear locking hook 41 are bent in the same direction, mounting and detachment of the trunk device 20 to and from the carrier 12 can be carried out without being hampered by the structure in any way.

Incidentally, although not shown in the drawings, the front locking section 31 and the rear locking section 41 may be composed of a front locking hook and a rear locking hook which are both bent in the forward direction, while the engaging hook 51 may be bent in the rearward direction and, at the time of a fixing operation by the operator, be moved rearward to be engaged with the carrier 12. With this configuration, also, the same effect as above can be obtained.

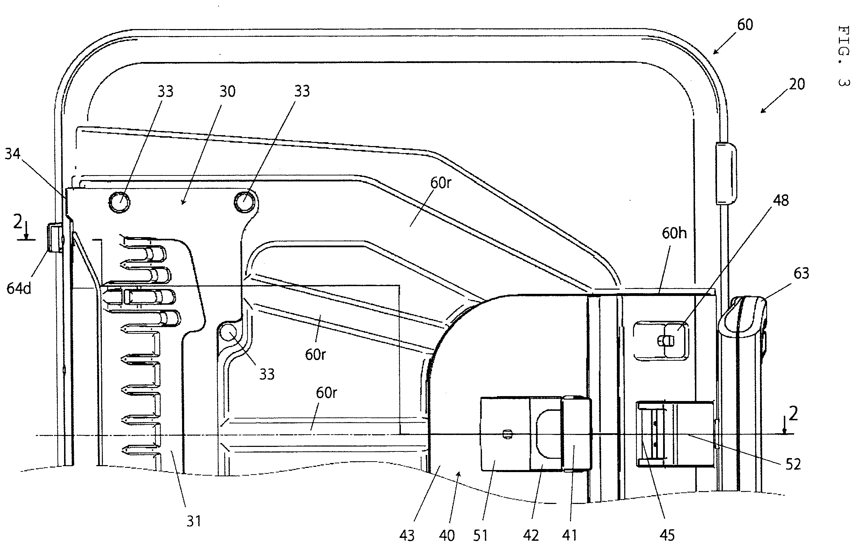

Fig. 2 is a sectional view taken along line 2-2 in Fig. 3 of the trunk device 20, and Fig. 3 is a bottom view of a part of the trunk device 20.

As shown in these figures, the front locking hook 31 and the rear locking hook 41 are composed respectively of members 30 and 40 separately from the trunk 60 of the trunk device 20, and are connected to the trunk 60. The member 30 will be referred to also as a front locking member, and the member 40 as a rear locking member.

The engaging hook 51 can be attached to the member 30 or 40 constituting the front locking hook 31 or the rear locking hook 41; in the example shown, the engaging hook 51 is attached to the rear locking member 40 constituting the rear locking hook 41.

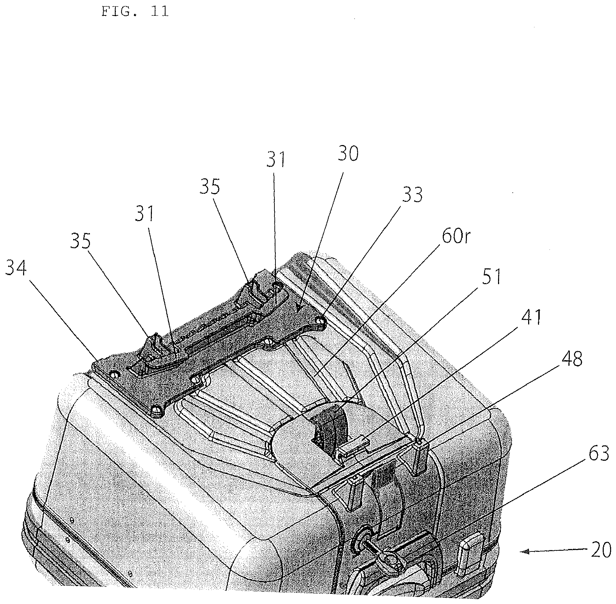

The trunk 60 has a rib 60r which extends in the longitudinal direction of the vehicle between the members constituting the front locking hook 31 and the rear locking hook 41 (namely, between the front locking member 30 and the rear locking member 40), and which is moulded integrally with the trunk 60. The number of ribs 60r can be varied as appropriate, and is at least one; in the example shown, five ribs 60r (of which only three are shown in Fig. 3) are provided in left-right symmetry. The ribs 60r shown in the figure are formed as recessed grooves, which are recessed to the inner side from an outer (bottom) surface of the trunk 60 (see also Fig. 11).

This configuration ensures that the rigidity of the member 40 to which the engaging hook 51 is attached can be secured, the rigidity required of the trunk 60 can be lowered, and the trunk 60 can be more reduced in material thickness and weight.

This point will be described more.

If the engaging hook 51 is not attached to the rear locking member 40 but is instead attached directly to the trunk 60, or if the engaging hook 51 and the rear locking hook 41 are provided directly on the trunk 60, then a force exerted between the engaging hook 51 and the rear locking section 41 when latching the engaging hook 51 to the carrier 12 would act directly on the trunk 60. Therefore, it would be necessary to increase the strength of at least the part of the trunk 60 which is between the engaging hook 51 and the rear locking section 41. This would lower the degree of freedom, on a material basis and on a structural basis, in configuring the trunk 60. As a result, the trunk 60 might be increased in material thickness and weight.

However, in the present embodiment, the engaging hook 51 is attached to the rear locking member 40 constituting the rear locking hook 41. This configuration ensures that the force exerted between the engaging hook 51 and the rear locking section 41 when latching the engaging hook 51 to the carrier 12 acts on the rear locking member 40, instead of acting directly on the trunk 60. Therefore, by securing the rigidity of the rear locking member 40, it is possible to enhance the degree of freedom, on a material basis and on a structural basis, in configuring the trunk 60, to lower the rigidity required of the trunk 60, and to realize a trunk reduced in material thickness and weight. Incidentally, the same effects as described above can also be obtained in the case where the engaging hook 51 is attached to the front locking member 30.

The engaging hook 51 is disposed between the front locking hook 31 and the rear locking hook 41. The engaging hook 51, an operating lever 52 for operating the engaging hook 51, and an interlocking member 53 for interlocking the operating lever 52 and the engaging hook 51 with each other are incorporated in the rear locking member 40.

This configuration ensures that, by securing the rigidity of the rear locking member 40 to which the engaging hook 51 is attached, it is possible to lower the rigidity required of the trunk, and to render the trunk smaller in material thickness and weight. In addition, it is possible to arrange the mechanism for operating the engaging hook 51 (the engaging operation mechanism) in a concentrated state on the rear side in the trunk 60, thereby securing the capacity of the trunk 60.

As shown in Figs. 1 and 12, the carrier 12 is provided at a rear portion of the vehicle, and a carrying handle 63 allowing the trunk 60 to be carried is provided at a rear portion of the trunk 60.

As mentioned above, the front locking hook 31 and the rear locking hook 41 are both bent in the rearward direction, and the operating lever 52 for operating the engaging hook 51 is provided to the rear of the rear locking hook 41. In addition, when an operating section 52c of the operating lever 52 is moved rearward, as will be described later, engagement with the carrier 12 by the engaging hook 51 is released.

This configuration ensures that the trunk device 20 can be easily mounted to and detached from the carrier 12, on the rear side of the vehicle (see Fig. 12). In addition, at the time of a releasing operation by the operating lever 52, namely, at the time when the engaging hook 51 is disengaged from the carrier 12, a force in the direction for engagement with the carrier 12 is exerted on the front locking hook 31 and the rear locking hook 41; therefore, the releasing operation can be carried out smoothly.

The rear locking member 40 and the engaging operation mechanism 50 will be described further.

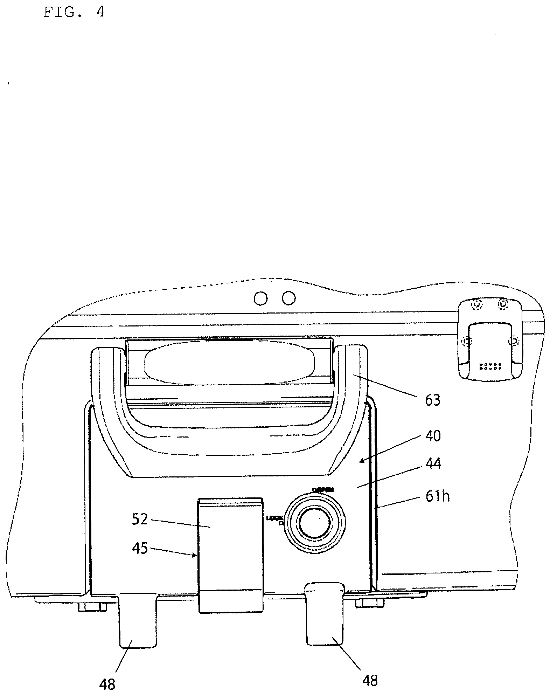

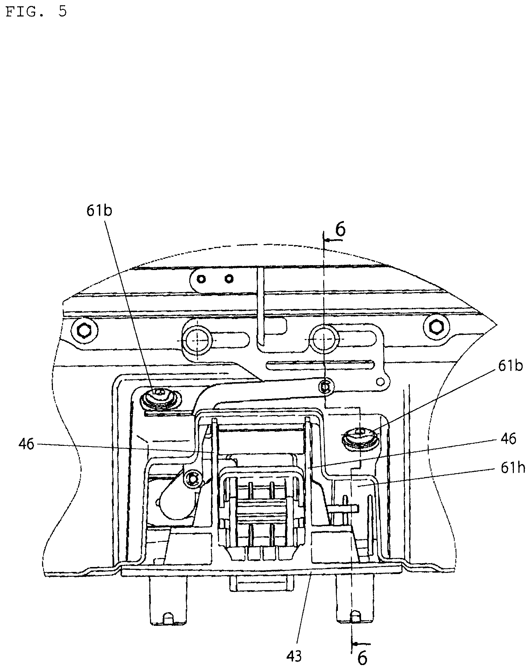

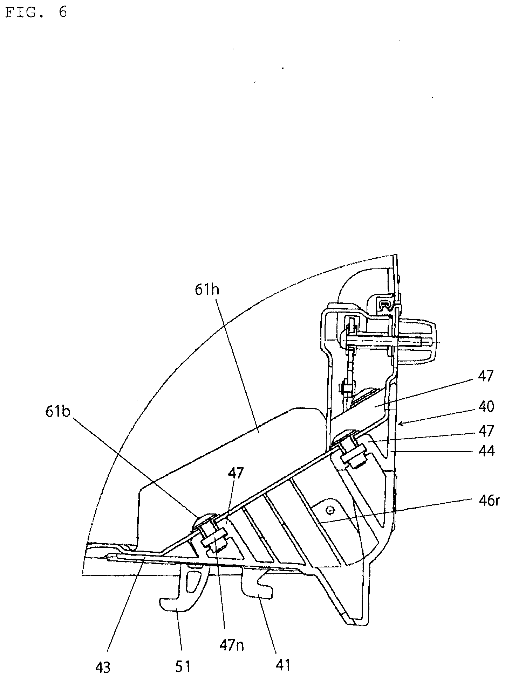

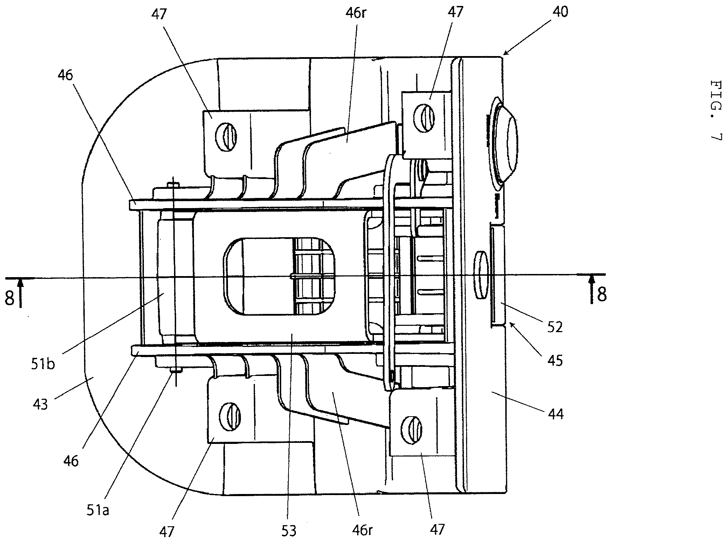

As shown in Figs. 4 to 10, the rear locking member 40 is an integrally moulded article. The rear locking member 40 includes: a bottom plate 43 having a first opening 42; a rear plate 44 erected at a rear portion of the bottom plate 43; a second opening 45 provided in an area extending from a rear portion of the bottom plate 43 to a lower portion of the rear plate 44; side plates 46, 46 erected so as to interconnect the bottom plate 43 and the rear plate 44 on both left and right sides of the first opening 42 and the second opening 45; a plurality of ribs 46r (Figs. 6 and 7) provided between the side plate 46 and the bottom plate 43 and the rear plate 44 so as to reinforce the side plates 46, 46; and a plurality of attachment sections 47 (in the example shown, four) for attachment to a trunk body 61.

The engaging operation mechanism 50 is incorporated between the side plates 46, 46 of the rear locking member 40.

The engaging hook 51 is provided in the first opening 45, and a base portion 51b thereof is rotatably supported by a shaft 51a located between and fixed to the side plates 46, 46.

The operating lever 52 is provided in the second opening 45, and a base portion 52b thereof is turnably supported by a shaft 52a located between and fixed to the side plates 46, 46.

The interlocking member 53 is composed of a link disposed between the side plates 46, 46. It is rotatably connected to the engaging hook 51 by a pin 51p, and is rotatably connected to the operating lever 52 by a pin 52p.

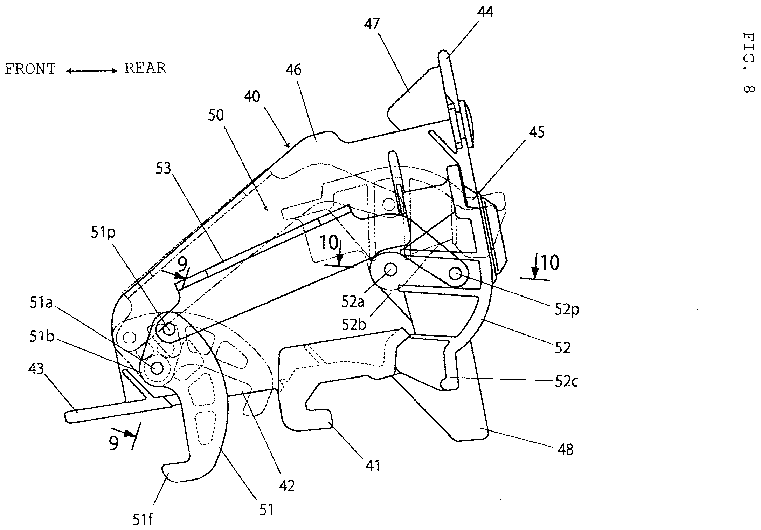

As shown in Fig. 8, when the operating lever 52 is turned as indicated by dotted lines in the manner of pulling the operating section 52c of the operating lever 52 rearwards, an interlocking action of the interlocking member 53 causes the engaging hook 51 to be turned rearward as indicated by dotted lines, and engagement of hook section 51f with the carrier 12 (Fig. 1) is released.

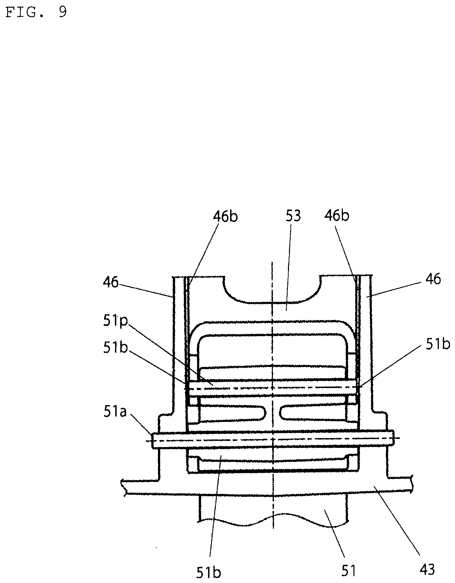

As shown in Fig. 9, the pin 51p which connects the engaging hook 51 and the interlocking member 53 has its ends 51b in contact with inner surfaces 46b of the side plates 46, so that the pin 51p is prevented from slipping off from the engaging hook 51 and the interlocking member 53.

This makes it unnecessary to provide the pin 51p with a stopper (circlip or the like), and also makes it unnecessary to work the pin 51p for arrangement of such a stopper.

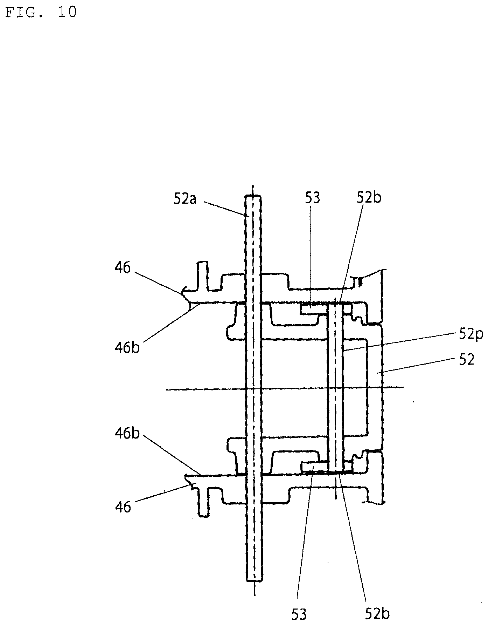

Similarly, as shown in Fig. 10, the pin 52p which connects the operating lever 52 and the interlocking member 53 has its ends 52b in contact with inner surfaces 46b of the side plates 46, so that the pin 52p is prevented from slipping off from the operating lever 52 and the interlocking member 53.

This makes it unnecessary to provide the pin 52p with a stopper (circlip or the like), and also makes it unnecessary to work the pin 52p for arrangement of such a stopper.

The rear locking member 40 and the engaging operation mechanism 50 as described above are configured as a unit, which is assembled onto the trunk 60.

As shown in Figs. 1 to 6, the trunk body 61 is provided with a recess 61h for accommodating the rear locking member 40 and the engaging operation mechanism 50.

The rear locking member 40 with the engaging operation mechanism 50 incorporated therein is fitted into the recess 61h of the trunk body 61, and is fixed in position by bolts 61b. As shown in Fig. 6, nuts 47n are embedded in the attachment sections 47 of the rear locking member 40. With the bolts 61b connected to the nuts 47n, the rear locking member 40 with the engaging operation mechanism 50 incorporated therein is fixed to the trunk body 61.

As shown in Fig. 2, the front locking section 31 has a bent section extending in the bending direction in two stages. Specifically, the front locking section 31 has a first hook part 31f1 and a second hook part 31f2.

This configuration ensures that even if the first-stage bent part 31f1 is disengaged from the carrier 12 for some reason (for example, instantaneous deformation of the carrier 12 and/or the trunk body 61), the locking of the trunk device to the carrier 12 can be maintained by the second-stage bent part 31f2. In the alternative case where the bent part is configured as a single stage and its length is simply enlarged, operations to mount and detach the trunk device to and from the carrier may be more difficult to carry out. Where the bent part is in two stages, on the other hand, such trouble can be obviated.

As shown in Fig. 11, the front locking member 30 is a plate-shaped integrally moulded article formed with a pair of left and right front locking hooks 31, and is fixed to the trunk body 61 by rivets 33.

As shown in Figs. 1 and 12, the trunk device 20 is mounted to the carrier 12 by a method in which the left and right front locking hooks 31 are locked to front locking sections 12f of the carrier 12, the rear locking hook 41 is locked to a rear locking section 12r of the carrier 12, and, thereafter, the operating section 52c of the operating lever 52 is turned to the front side, thereby engaging the engaging hook 51 with a central locking section 12c of the carrier 12.

As shown in Figs. 2 and 12 to 14, the trunk 60 has a trunk body 61 and a lid 62 which is provided as to be openable and closable relative to the trunk body 61.

The trunk 60 has a metallic frame 64 and a fastener 65, and, by opening and closing any of them, the lid 62 can be opened and closed.

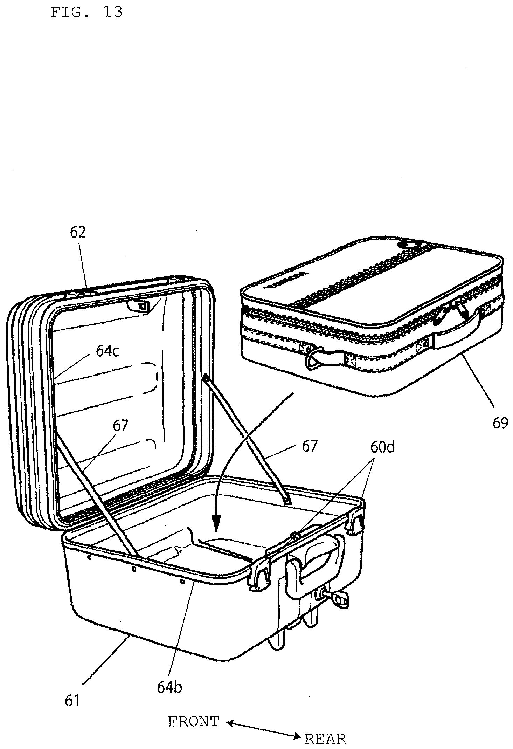

Specifically, as shown in Fig. 13, with catches 60d, 60d unfastened and with the metallic frame 64 opened, the lid 62 can be opened.

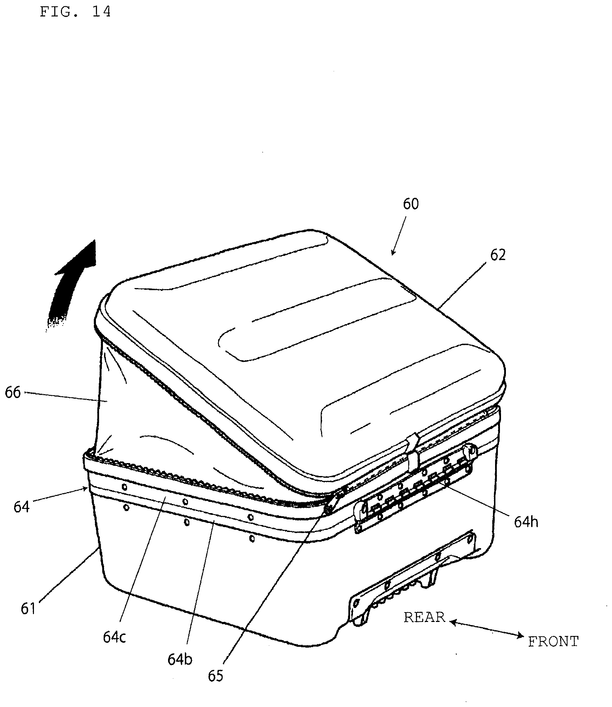

Further, as shown in Fig. 14, with the fastener 65 opened, the lid 62 can be widened to increase the trunk capacity. In Figs. 2 and 14, reference numeral 66 denotes an expander sheet which restrains the degree of opening of the lid 62 when the lid 62 is widened by opening the fastener 65 and by which the interior of the trunk 60 increased in capacity due to the widening of the lid 62 is partitioned from the exterior.

This configuration ensures that, despite the trunk being a hard case, the trunk capacity can be controlled by opening/closing of the fastener 65 and the expander sheet 66.

As shown in Fig. 14, the fastener 65 is provided along three sides of the trunk 60 so that the lid is opened only at three sides in this structure.

This ensures that the rigidity of the trunk as a whole is secured.

In general, an opening/closing structure using a fastener and an expander sheet has the fastener provided along the whole perimeter, so that the lid is capable of parallel motion. In such a structure, however, the lid becomes unstable, and the structure is unsuitable particularly for saddle type vehicles such as a motorcycle.

However, in the current embodiment, the fastener 65 is provided along only three sides of the trunk 60, and the lid is opened only at the three sides. Therefore, the rigidity of the trunk as a whole is secured.

As shown in Figs. 2 and 13, the metallic frame 64 includes: a body-side frame 64b provided along an upper edge of the trunk body 61; a lid-side frame 64c provided along a lower edge of the lid 62; and a hinge 64h (best shown in Fig. 14) by which both the frames 64b and 64c are rotatably connected at their front portions. The lid 62 can be opened and closed, with the hinge 64h as a centre of turning. In the figures, reference numeral 67 denotes restraining belts, which interconnect both the frames 64b and 64c so as to restrict the opening angle of the lid, and reference numeral 69 (Fig. 13) denotes an inner bag.

As shown in Fig. 2, the body-side frame 64b has a projection 64p, which is arranged along the inner side of aperture edges thereof of the body-side frame 64b and projects towards the lid 62 side. On the other hand, the lid-side frame 64c is provided with a recessed groove 64g along the inner side of aperture edges thereof, for accommodating the projection 64p. A tubular seal 64s is contained in the recessed groove 64g. When the lid 62 is closed, a tip portion of the projection 64p enters into the recessed groove 64g, to come into contact with the tubular seal 64s in the manner of getting caught in the tubular seal 64s. This structure enhances sealing performance.

The hinge 64h is fixed to both the frames 64b and 64c by rivets 64r.

In this embodiment, leg members 64d are fixed to the lid-side frame 64c by rivets at both ends of the latter. Also, the front locking member 30 is provided with first leg sections 34, 34 (Figs. 3 and 11). This configuration ensures that when the trunk 60 is placed on a floor, with the carrying handle 63 uppermost, the trunk 60 is maintained to be substantially horizontal.

In addition, as shown in Figs. 2 and 11, second leg sections 35, 35 are provided at a bottom portion of the front locking member 30. Also, the rear locking member 40 is provided with leg sections 48, 48. This configuration ensures that when the trunk 60 is placed on a floor, with the lid 62 uppermost, the trunk 60 is kept to be substantially horizontal. The heights of the second leg sections 35, 35 and the leg sections 48, 48 are set such that the engaging hook 51 does not contact the ground.

While an embodiment of the present invention has been described above, the invention is not restricted to the above embodiment, and appropriate modifications are possible within the scope of the invention as defined in the appended claims.

## Claims

1. A saddle type vehicle with a mounting structure for a trunk device, said mounting structure comprising:
a carrier (12) provided on the rear of a saddle type vehicle (10) to hold baggage on a top face of the carrier (12);
a trunk device (20) which has a trunk (60) for storing articles and which is detachably mounted to the top face of the carrier (12);
a front locking section (31) and a rear locking section (41) projecting to the carrier (12) side at the front and rear of a mounting surface (21) of the trunk device (20) for mounting to the carrier (12); and
an engaging hook (51) which operates according to an operator's operation and engages with the carrier (12) to thereby fix the trunk device (20) to the carrier (12),
**characterized in that** the front locking section (31) and the rear locking section (41) are composed of a front locking hook (31) and a rear locking hook (41) which are bent in the same direction selected from forward and rearward directions, and
the engaging hook (51) is bent in a direction opposite to the bending direction of both the locking hooks (31, 41) and, at the time of a fixing operation by the operator, is moved in the direction opposite to the bending direction of both the locking hooks (31, 41), to be engaged with the carrier (12).

2. The saddle type vehicle according to claim 1,
wherein the front locking hook (31) and the rear locking hook (41) are composed of members (30, 40) which are formed separately from the trunk (60) and are connected to the trunk (60),
the engaging hook (51) is attached to the member (30 or 40) constituting the front locking hook (31) or the rear locking hook (41), and
the trunk (60) has at least one rib (60r) which extends in the longitudinal direction of the vehicle between the members (30, 40) constituting the front locking hook (31) and the rear locking hook (41) and which is moulded integrally with the trunk (60).

3. The saddle type vehicle according to claim 2,
wherein the locking hook on the opposite side from the side where the engaging hook (51) is attached has a bent section extending in the bending direction thereof in two stages.

4. The saddle type vehicle according to any of claims 1 to 3,
wherein the front locking hook (31) and the rear locking hook (41) are both bent in the rearward direction, the engaging hook (51) is disposed between the front locking hook (31) and the rear locking hook (41), the rear locking hook (41) is composed of a member (40) formed separately from the trunk (60) and is connected to the trunk (60), and the engaging hook (51), an operating lever (52) for operating the engaging hook (51), and an interlocking member (53) for interlocking the operating lever (52) and the engaging hook (51) with each other, are all incorporated in the said member (40).

5. The saddle type vehicle according to any of claims 1 to 4,
wherein the carrier (12) is provided at a rear portion of the vehicle, and a carrying handle (63) allowing the trunk (60) to be carried is provided at a rear portion of the trunk (60), and
the front locking hook (31) and the rear locking hook (41) are both bent in the rearward direction, the operating lever (52) for operating the engaging hook (51) is provided to the rear of the rear locking hook (41), and a rearward movement of an operating section (52c) of the operating lever (52) releases the engagement between the carrier (12) and the engaging hook (51).

## Patentansprüche

1. Fahrzeug vom Satteltyp mit einer Befestigungsstruktur für eine Koffervorrichtung, wobei die Befestigungsstruktur umfasst:
einen Träger (12), der hinten an einem Fahrzeug vom Satteltyp (10) bereitgestellt ist, um Gepäck auf einer oberen Fläche des Trägers (12) zu halten;
eine Koffervorrichtung (20), die einen Koffer (60) zum Aufbewahren von Gegenständen aufweist und die lösbar auf der oberen Fläche des Trägers (12) befestigt ist;
einen vorderen Blockierungsabschnitt (31) und einen hinteren Blockierungsabschnitt (41), die zu der Seite des Trägers (12) hin vorn und hinten an einer Befestigungsoberfläche (21) der Koffervorrichtung (20) hervorstehen, um den Träger (12) zu befestigen; und
ein Eingriffshaken (51), der gemäß einer Betätigung eines Bedieners betätigt wird und mit dem Träger (12) eingreift, um dadurch die Koffervorrichtung (20) an dem Träger (12) zu fixieren,
**dadurch gekennzeichnet, dass** der vordere Blockierungsabschnitt (31) und der hintere Blockierungsabschnitt (41) aus einem vorderen Blockierungshaken (31) und einem hinteren Blockierungshaken (41) bestehen, die in dieselbe Richtung, ausgewählt aus vorderen und hinteren Richtungen, gebogen sind, und
der Eingriffshaken (51) in eine Richtung entgegen der Biegerichtung der beiden Blockierungshaken (31, 41) gebogen ist und während einer Fixierungsbetätigung durch den Bediener in die Richtung entgegen der Biegerichtung der beiden Blockierungshaken (31, 41) bewegt wird, um mit dem Träger (12) in Eingriff gebracht zu werden.

2. Fahrzeug vom Satteltyp nach Anspruch 1,
wobei der vordere Blockierungshaken (31) und der hintere Blockierungshaken (41) aus Elementen (30, 40) bestehen, die getrennt von dem Koffer (60) gebildet sind und mit dem Koffer (60) verbunden sind,
der Eingriffshaken (51) an dem Element (30 oder 40) befestigt ist, das den vorderen Blockierungshaken (31) oder den hinteren Blockierungshaken (41) begründet, und der Koffer (60) mindestens eine Rippe (60r) aufweist, die sich in die Längsrichtung des Fahrzeugs zwischen den Elementen (30, 40) erstreckt, die den vorderen Blockierungshaken (31) und den hinteren Blockierungshaken (41) begründen, und die einstückig mit dem Koffer (60) gegossen ist.

3. Fahrzeug vom Satteltyp nach Anspruch 2,
wobei der Blockierungshaken auf der entgegengesetzten Seite von der Seite, an der der Eingriffshaken (51) befestigt ist, einen gebogenen Abschnitt aufweist, der sich in zwei Stufen in die Biegerichtung desselben erstreckt.

4. Fahrzeug vom Satteltyp nach einem der Ansprüche 1 bis 3,
wobei der vordere Blockierungshaken (31) und der hintere Blockierungshaken (41) beide in die hintere Richtung gebogen sind, der Eingriffshaken (51) zwischen dem vorderen Blockierungshaken (31) und dem hinteren Blockierungshaken (41) angeordnet ist, der hintere Blockierungshaken (41) aus einem Element (40) besteht, das getrennt von dem Koffer (60) gebildet ist und mit dem Koffer (60) verbunden ist, und der Eingriffshaken (51), ein Betätigungshebel (52) zum Bedienen des Eingriffshakens (51) und ein Verriegelungselement (53) zum Verriegeln des Betätigungshebels (52) und des Eingriffshakens (51) miteinander allesamt in dem Element (40) eingebaut sind.

5. Fahrzeug vom Satteltyp nach einem der Ansprüche 1 bis 4,
wobei der Träger (12) an einem hinteren Bereich des Fahrzeugs bereitgestellt ist, und ein Tragegriff (63), der es ermöglicht, dass der Koffer (60) getragen wird, an einem hinteren Bereich des Koffers (60) bereitgestellt ist, und
der vordere Blockierungshaken (31) und der hintere Blockierungshaken (41) beide in die hintere Richtung gebogen sind, der Betätigungshebel (52) zum Bedienen des Eingriffshakens (51) hinten an dem hinteren Blockierungshaken (41) bereitgestellt ist, und eine Bewegung nach hinten eines Betätigungsabschnitts (52c) des Betätigungshebels (52) den Eingriff zwischen dem Träger (12) und dem Eingriffshaken (51) löst.

## Revendications

1. Véhicule du type à enfourcher avec une structure de montage pour un dispositif de coffre, ladite structure de montage comprenant :
un support (12) prévu sur l'arrière d'un véhicule du type à enfourcher (10) pour maintenir des bagages sur une face supérieure du support (12) ;
un dispositif de coffre (20) qui présente un coffre (60) pour le stockage d'articles et qui est monté de manière détachable sur la face supérieure du support (12) ;
une section de verrouillage avant (31) et une section de verrouillage arrière (41) faisant saillie sur le côté de support (12) sur l'avant et l'arrière d'une surface de montage (21) du dispositif de coffre (20) pour le montage sur le support (12) ; et
un crochet de mise en prise (51) qui fonctionne selon un actionnement d'opérateur et se met en prise avec le support (12) pour fixer ainsi le dispositif de coffre (20) au support (12),
**caractérisé en ce que** la section de verrouillage avant (31) et la section de verrouillage arrière (41) sont composées d'un crochet de verrouillage avant (31) et d'un crochet de verrouillage arrière (41) qui sont pliés dans la même direction sélectionnée parmi des directions vers l'avant et l'arrière, et
le crochet de mise en prise (51) est plié dans une direction opposée à la direction de pliage des deux crochets de verrouillage (31, 41) et, au moment d'une opération de fixation par l'opérateur, est déplacé dans la direction opposée à la direction de pliage des deux crochets de verrouillage (31, 41), pour être mis en prise avec le support (12).

2. Véhicule du type à enfourcher selon la revendication 1,
dans lequel le crochet de verrouillage avant (31) et le crochet de verrouillage arrière (41) sont composés d'éléments (30, 40) qui sont formés séparément du coffre (60) et sont raccordés au coffre (60),
le crochet de mise en prise (51) est attaché à l'élément (30 ou 40) constituant le crochet de verrouillage avant (31) ou le crochet de verrouillage arrière (41), et
le coffre (60) présente au moins une nervure (60r) qui s'étend dans la direction longitudinale du véhicule entre les éléments (30, 40) constituant le crochet de verrouillage avant (31) et le crochet de verrouillage arrière (41) et qui est moulée d'un seul tenant avec le coffre (60).

3. Véhicule du type à enfourcher selon la revendication 2,
dans lequel le crochet de verrouillage sur le côté opposé du côté où le crochet de mise en prise (51) est attaché présente une section pliée s'étendant dans la direction de pliage de celui-ci à deux niveaux.

4. Véhicule du type à enfourcher selon l'une quelconque des revendications 1 à 3, dans lequel le crochet de verrouillage avant (31) et le crochet de verrouillage arrière (41) sont tous les deux pliés dans la direction vers l'arrière, le crochet de mise en prise (51) est disposé entre le crochet de verrouillage avant (31) et le crochet de verrouillage arrière (41), le crochet de verrouillage arrière (41) est composé d'un élément (40) formé séparément du coffre (60) et est raccordé au coffre (60), et le crochet de mise en prise (51), un levier d'actionnement (52) pour l'actionnement du crochet de mise en prise (51), et un élément d'interverrouillage (53) pour le verrouillage du levier d'actionnement (52) et du crochet de mise en prise (51) l'un avec l'autre, sont tous incorporés dans ledit élément (40).

5. Véhicule du type à enfourcher selon l'une quelconque des revendications 1 à 4,
dans lequel le support (12) est prévu sur une portion arrière du véhicule, et un manche porteur (63) permettant au coffre (60) d'être porté est prévu sur une portion arrière du coffre (60), et
le crochet de verrouillage avant (31) et le crochet de verrouillage arrière (41) sont tous les deux pliés dans la direction vers l'arrière, le levier d'actionnement (52) pour l'actionnement du crochet de mise en prise (51) est prévu sur l'arrière du crochet de verrouillage arrière (41), et un mouvement vers l'arrière d'une section d'actionnement (52c) du levier d'actionnement (52) libère la mise en prise entre le support (12) et le crochet de mise en prise (51).
